(19) Europäisches Patentamt
European Patent Office
Office européen des brevets

(11) Publication number: 0 257 432 A2

# (12) EUROPEAN PATENT APPLICATION

(21) Application number: 87111580.4

(22) Date of filing: 10.08.87

(51) Int. Cl.⁴: C08K 13/02 , C08L 27/06 , //(C08K13/02,3:34,5:12)

(30) Priority: 22.08.86 JP 196898/86

(43) Date of publication of application: 02.03.88 Bulletin 88/09

(84) Designated Contracting States: DE FR GB NL

(71) Applicant: MITSUBISHI KASEI VINYL COMPANY
5-2, Marunouchi 2-chome
Chiyoda-ku Tokyo(JP)

(72) Inventor: Morimoto, Seiichi
13, Minamiwaki-cho, 2-chome Nakagawa-ku
Nagoya-shi Aichi-ken(JP)
Inventor: Shiji, Kazuyuki
54, Shotoku-cho 4-chome Minato-ku
Nagoya-shi Aichi-ken(JP)
Inventor: Kusu, Hisahiro
23, Aoba-cho 2-chome
Kuwana-shi Mie-ken(JP)

(74) Representative: Wächtershäuser, Günter, Dr.
Tal 29
D-8000 München 2(DE)

## (54) Vinyl chloride resin composition.

(57) A vinyl chloride resin composition comprising 100 parts by weight of a vinyl chloride resin, from 10 to 200 parts by weight of a plasticizer and, as a stabilizer, from 0.5 to 50 parts by weight of a lead silicate obtained by melting a mixture of lead oxide and silicon dioxide, followed by cooling and pulverization.

EP 0 257 432 A2

# VINYL CHLORIDE RESIN COMPOSITION

The present invention relates to a vinyl chloride resin composition having excellent heat resistance. More particularly, it relates to a vinyl chloride resin composition wherein a certain specific lead silicate stabilizer is used and which has remarkably excellent thermal aging characteristics.

A chlorine-containing resin such as a vinyl chloride resin shows a decomposition-coloring phenomenon during extrusion or injection molding due to dehydrochlorination caused by heat, whereby the thermal aging characteristics deteriorate. Thus, it is necessary to add a stabilizer. Heretofore, as a stabilizer for a chlorine-containing resin composition, a lead-type stabilizer such as basic lead carbonate, dibasic lead phthalate, dibasic lead sulfite, tribasic lead sulfate, dibasic lead phosphite or dibasic lead stearate, a cadmium-barium composite stabilizer, a barium-zinc composite stabilizer, a tin-type stabilizer and a silica gel-coprecipitated lead orthosilicate have been practically used.

The recent trend for a light weight, thin and compact structures has given an influence also over molded products of the vinyl chloride resin composition such as electric wires and films, and not only high temperature molding is required but also a high quality is required with respect to the thermal aging properties of molded products. However, with the above-mentioned various stabilizers, it has been impossible to obtain a product which fully satisfies various properties including heat stability, thermal aging properties, compatibility with the vinyl chloride resin and electric insulating properties.

Under these circumstances, the present inventors have conducted extensive researches for stabilizers to improve the thermal stability and thermal aging properties in particular, and as a result, have found that the above-mentioned properties can be satisfied with a certain specific lead silicate. The present invention has been accomplished on the basis of this discovery.

Thus, the present invention provides a vinyl chloride resin composition comprising 100 parts by weight of a vinyl chloride resin, from 10 to 200 parts by weight of a plasticizer and, as a stabilizer, from 0.5 to 50 parts by weight of a lead silicate obtained by melting a mixture of lead oxide and silicon dioxide, followed by cooling and pulverization.

Now, the present invention will be described in detail with reference to the preferred embodiments.

In the accompanying drawings, Figure 1 is a graph showing the relation between the weight loss on heating at 158°C and the number of aging days with respect to the vinyl chloride resin compositions of the Examples and Comparative Examples of the present invention. The corresponding Example and Comparative Example are shown by the same type of curves.

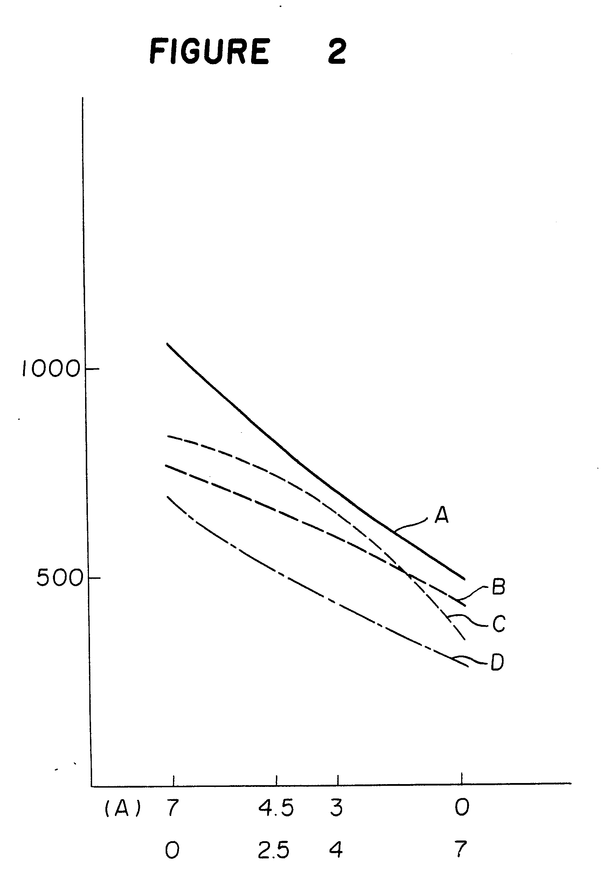

Figure 2 is a graph showing the changes in the thermal stability at various proportions of lead silicate (A) and tribasic lead sulfate when they are used in combination as the stabilizer, with respect to various plasticizers. A represents a curve when tri-n-octyl trimellitate is used as a plasticizer, B represents a curve wherein polyester plasticizer (A) is used as a plasticizer, C represents a curve wherein tetraheptyl biphenyltetracarboxylate is used as a plasticizer and D represents a curve where tetraoctyl pyromellitate is used as a plasticizer.

The vinyl chloride resin to be employed for the composition of the present invention, includes all the resins prepared by polymerizing vinyl chloride or a mixture of viny chloride with a copolymerizable comonomer by various conventional methods such as suspension polymerization, bulk polymerization, fine suspension polymerization and emulsion polymerization. The average degree of polymerization is preferably within a range of from 700 to 10,000, more preferably from 1,100 to 10,000. As the comonomer copolymerizable with vinyl chloride, there may be mentioned a vinyl ester such as vinyl acetate, vinyl propionate or vinyl laurate; an acrylic acid ester such as methyl acrylate, ethyl acrylate or butyl acrylate; methacrylic acid ester such as methyl methacrylate or ethyl methacrylate; a maleic acid ester such as dibutyl maleate or diethyl maleate; a fumaric acid ester such as dibutyl fumarate or diethyl fumarate; a vinyl ether such as vinyl methyl ether, vinyl butyl ether or vinyl octyl ether; a vinyl cyanide such as acrylonitrile or methacrylonitrile; an α-olefin such as ethylene, propylene or styrene; and a vinylidene halide or a vinyl halide other than vinyl chloride, such as vinylidene chloride or vinyl bromide. The comonomer is used usually in an amount of not more than 30% by weight, preferably not more than 20% by weight, of the constituents of the vinyl chloride resin. Of course, the comonomer is not limited to the above-mentioned specific examples.

There is no particular restriction to the plasticizer to be used for the vinyl chloride resin composition of the present invention. However, an alkyl biphenyltetracarboxylate of the following formula I is particularly preferred.

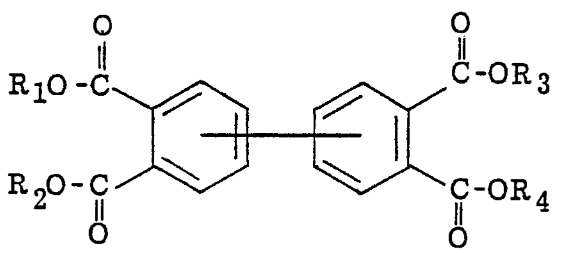

[I]

wherein each of $R_1$, $R_2$, $R_3$ and $R_4$ which may be the same or different, represents an alkyl group which may have a branched chain.

The alkyl group for each of $R_1$, $R_2$, $R_3$ and $R_4$ preferably has from 4 to 13 carbon atoms.

Specific examples of such an alkyl biphenyltetracarboxylate include tetrabutyl 2,3,3′,4′-or 3,4,3′,4′-biphenyltetracarboxylate, tetrapentyl 2,3,3′,4′-or 3,4,3′,4′-biphenyltetracarboxylate, tetrahexyl 2,3,3′,4′-or 3,3′,4,4′-biphenyltetracarboxylate, tetraheptyl 2,3,3′,4′-or 3,4,3′,4′-biphenyltetracarboxylate, tetra(2-methylhexyl) 2,3,3′,4′-or 3,4,3′,4′-biphenyltetracarboxylate, tetra(n-octyl) 2,3,3′,4′-or 3,4,3′,4′-biphenyltetracarboxylate, tetra(2-ethylhexyl) 2,3,3′,4′-or 3,4,3′,4′-biphenyltetracarboxylate, tetraisooctyl 2,3,3′,4′-or 3,4,3′,4′-biphenyltetracarboxylate, tetranonyl 2,3,3′,4′-or 3,4,3′,4′-biphenyltetracarboxylate, tetradecyl 2,3,3′,4′-or 3,4,3′,4′-biphenyltetracarboxylate, tetraundecyl 2,3,3′,4′-or 3,4,3′,4′-biphenyltetracarboxylate, tetradodecyl 2,3,3′,4′-or 3,4,3′,4′-biphenyltetra carboxylate and tetra(mixed oxoalcohol)ester of 2,3,3′,4′-or 3,4,3′,4′-biphenyltetracarboxylic acid.

These plasticizers can be produced by a conventional esterification method in the presence or absence of a solvent and in the presence of an esterification catalyst by reacting 2,3,3′,4′-biphenyltetracarboxylic acid or 3,4,3′,4′-biphenyltetracarboxylic acid with an alcohol having from 4 to 13 carbon atoms to obtain a 2,3,3′,4′-tetracarboxylate or a 3,4,3′,4′-tetracarboxylate, respectively. The alcohol used for the esterification reaction of the biphenyltetracarboxylic acid, includes butanol, pentanol, hexanol, heptanol, 2-methylhexanol, octanol, 2-ethylhexanol, isooctanol, nonanol, decanol, isodecanol, undecanol, dodecanol, a mixture of these alcohols, and a $C_7$-$C_8$, $C_7$-$C_9$ or $C_9$-$C_{11}$ oxoalcohol mixture obtained by an oxo reaction using an α-olefin as the main material. Of course, depending upon the amount of the alcohol or the esterification condition, a monoester, a diester or triester will also be formed. The plasticizer used for the composition of the present invention may contain such esters.

Other useful plasticizers include a phthalate plasticizer such as di-n-butyl phthalate, di-n-octyl phthalate, di-2-ethylhexyl phthalate, diisooctyl phthalate, octyldecyl phthalate, diisodecyl phthalate, butylbenzyl phthalate, di-2-ethylhexyl isophthalate or a phthalic acid ester of a higher alcohol having from 11 to 13 carbon atoms; a trimellitate plasticizer such as n-octyl-n-decyl trimellitate, tri-2-ethylhexyl trimellitate, triisodecyl trimellitate or tri-n-octyl trimellitate; a fatty acid ester plasticizer such as di-2-ethylhexyl adipate, di-n-decyl adipate, diisodecyl adipate, di-2-ethylhexyl azelate, dibutyl sebacate or di-2-ethylhexyl sebacate; a phosphate plasticizer such as tributyl phosphate, tri-2-ethylhexyl phosphate, 2-ethylhexyldiphenyl phosphate or tricresyl phosphate; an epoxy plasticizer such as epoxidized soybean oil, epoxidized linseed oil or epoxidized tall oil fatty acid 2-ethylhexyl ester; and liquid epoxy resin.

When oil resistance is required in addition to the thermal aging properties, it is preferred to employ a polyester plasticizer.

As the polyester plasticizer, any one of conventional polyester plasticizers (so-called polymeric) may be employed. Namely, they are obtained by sealing the terminals of polycondensation products (e.g. an average molecular weight of from 300 to 8,000) of a polybasic carboxylic acid such as succinic acid, adipic acid, azelaic acid, sebacic acid, phthalic acid or trimellitic acid with a polyhydric alcohol such as ethylene glycol, 1,2-propylene glycol, 1,2-butylene glycol, 1,3-butylene glycol, 1,4-butylene glycol, 1,5-pentane diol, 1,6-hexane diol or neopentyl glycol, with one or more monohydric alcohols such as butanol, pentanol, hexanol, heptanol, n-octanol, 2-ethylhexanol, nonanol, decanol, undecanol, dodecanol and tridecanol, or with one or more monobasic carboxylic acids such as acetic acid, propanoic acid, butanoic acid, 2-methylpropanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, cyclohexanoic acid and benzoic acid.

The above plasticizers may be used alone or in combination as a mixture of two or more different kinds.

The plasticizer is used usually in an amount of from 10 to 200 parts by weight relative to 100 parts by weight of the vinyl chloride resin. From the viewpoint of the heat resistance, aging resistance and processability, it is particularly preferred to employ the plasticizer in an amount of from 20 to 200 parts by weight relative to 100 parts by weight of the vinyl chloride resin.

The vinyl chloride resin of the present invention provides excellent heat resistance by the combination with a certain specific stabilizer.

The basic lead silicate to be used as the stabilizer in the present invention, is a lead silicate obtained by melting a mixture of lead oxide and silicon dioxide, followed by cooling and pulverization. Preferred is the one obtained by mixing lead oxide and silicon dioxide in a weight ratio of 60-93:40-7, particularly 70-90:30-10, respectively.

Although the reason is not clearly understood, a better result is obtainable when the silicate lead used in the present invention contains unreacted silicon dioxide rather than the lead silicate wherein lead oxide and silicon dioxide have been completely reacted.

The above lead silicate as a stabilizer is used usually in an amount within a range of from 0.5 to 50 parts by weight relative to 100 parts by weight of the vinyl chloride resin. Preferably, it is used in an amount of from 1 to 20 parts by weight, whereby it is most effective as the stabilizer.

If the amount is less than 0.5 part by weight, no adequate effectiveness for the thermal stability can be expected, and if the amount exceeds 50 parts by weight, no further improvement in the thermal stability is obtainable, and the physical properties such as the tensile strength and elongation tend to deteriorate.

In the vinyl chloride resin composition of the present invention, as the stabilizer, in addition to the above lead silicate, a tribasic lead sulfate, a dibasic lead phthalate, a lead orthosilicate-silica gel coprecipitate, a dibasic lead stearate, a cadmium-barium stabilizer, a barium-zinc stabilizer, a calcium-zinc stabilizer, a tin stabilizer or a stabilizer composed mainly of a salt of metal such as magnesium, alminum or silicon, may also be employed, as the case requires.

In addition to the above-mentioned essential components, additives which are commonly employed in vinyl chloride resins, such as a stabilizer, a lubricant, a flame retardant, an antioxidant, a ultraviolet absorber, a filler, a coloring agent, a releasing agent, etc. may be incorporated, in many cases, to the vinyl chloride resin composition according to the present invention. Further, if necessary, a chelating agent, a crosslinking agent or a crosslinking assistant may also be incorporated.

The vinyl chloride resin composition of the present invention may be prepared by uniformly mixing the vinyl chloride resin, the plasticizer and the lead silicate as the stabilizer, and if necessary, the above-mentioned other additives. For instance, a mixture of such components is uniformly dispersed by e.g. a ribbon blender, a cake mixer, a crusher or a high speed mixer to obtain a composition. Further, this composition may further be kneaded by means of a mill rolls, a Bunbury mixer, a press kneader, a single screw extruder, a double screw extruder, a plastificator or a cokneader. A sheet or strand obtained by kneading may be cooled and then pelletized to obtain a composition in the form of pellets.

Now, the composition of the present invention will be described in further detail with reference to Examples. However, it should understood that the present invention is by no means restricted to these specific Examples.

In the Examples, "parts" means "parts by weight".

EXAMPLES 1 to 7 and COMPARATIVE EXAMPLES 1 to 13

Vinyl chloride resin (average degree of polymerization $\bar{P}$ : 2300) 100 parts
Plasticizer: As identified in Tables 1-3 60 parts
Stabilizer: As identified in Tables 1-3 7 parts
Lubricant: Lead stearate 0.5 part
Filler: Calcium carbonate 20 parts
Antioxidant: Bisphenol A 0.5 parts

A mixture of the above components was uniformly blended by a high speed stirrer, then kneaded by mill rolls and formed into a sheet. The thermal stability is shown in Tables 1 to 4 as compared with the cases wherein other stabilizers were employed.

The thermal stability was measured in accordance with JIS K-6723, except that the test temperature was changed from 180°C to 190°C. The thermal stability in Tables 1 to 4 is represented by the time until Congo Red paper underwent color change.

With respect to the case wherein a polyester plasticizer was used, the thermal aging resistance and the oil resistance were also measured in addition to the above thermal stability.

The thermal aging resistance was measured in accordance with JIS K-6723, except that the heating temperature, the heating time and the thickness of the test piece were changed as identified in the Tables.

The oil resistance was measured in accordance with UL standards by using No. 2 oil of ASTM under the conditions of the heating temperature, the heating time and the thickness of the test piece as identified in the Tables.

Table 1

| | Example 1 | Comparative Example 1 |
|---|---|---|
| Plasticizer | BTPH *1) | BTPH *1) |
| Stabilizer | Lead silicate (A) | Tribasic lead surface |
| Thermal stability (min) | 815 | 350 |

*1) BTPH: Tetraheptyl biphenyltetracarboxylate prepared by esterification of biphenyltetracarboxylic acid with a $C_7$-alcohol (n/i = 1) (Diadol-7, tradename, manufactured by Mitsubishi Chemical Industries Limited)

Table 2

| | | Example 2 | Example 3 | Comparative Example 2 | Comparative Example 3 | Comparative Example 4 | Comparative Example 5 | Comparative Example 6 |
|---|---|---|---|---|---|---|---|---|
| Plasticizer | | Polyester plasticizer A *2) | Polyester plasticizer A *2) | Polyester plasticizer A *2) | Polyester plasticizer A *2) | Polyester plasticizer A *2) | Polyester plasticizer A *2) | Polyester plasticizer A *2) |
| Stabilizer | | Lead silicate (A) | Lead silicate (B) | Lead silicate (C) | Lead silicate (D) | Lead silicate (E) | Dibasic lead phthalate | Ba-Zn stabilizer *3 |
| Thermal stability (min) | | 750 | 740 | 315 | 330 | 85 | 365 | 160 |
| Thermal aging resistance test condition: $158^{o}C$ for 168 hrs. Thickness of test piece: 1mm | Tensile elongation retention (%) | 83 | 80 | 49 | 35 | 0 | 61 | 0 |
| | Weight loss on heating (%) | 2.6 | 2.5 | 4.5 | 5.5 | 15.6 | 7.5 | 17.0 |
| Thermal aging resistance test condition: $136^{o}C$ for 60 days Thickness of test piece: 1m: | Tensile elongation retention (%) | 78 | 75 | 40 | 30 | 0 | 0 | 0 |
| | Weight loss on heating (%) | 3.2 | 3.0 | 6.5 | 8.0 | 30.0 | 26.7 | 17.0 |

*2) A polyester comprising adipic acid as the acid component, 1,2-butylene glycol as the glycol component and 2-ethylhexanol as the terminal sealing agent, and having a molecular weight of about 2,000

*3) When added in an amount of 3 parts by weight or more, the Ba-Zn stabilizer brings about breeding out and no substantial improvement of the thermal stability is observed. Therefore, here, 3 parts by weight of the Ba-Zn stabilizer and 5 parts by weight of epoxidized linseed oil were used in combination.

Table 3

| | | Example 4 | Example 5 | Comparative Example 7 | Comparative Example 8 | Comparative Example 9 |
|---|---|---|---|---|---|---|
| Plasticizer | | Polyester plasticizer B *4) | Polyester plasticizer A | Polyester plasticizer A | TOPM * | TOTM * |
| Stabilizer | | Lead silicate (A) | Lead silicate (A) | Dibasic lead sulfate | Dibasic lead sulfate | Dibasic lead sulfate |
| Thermal aging resistance test condition: $136^{o}C$ for 60 days Thickness of test piece: 1mm | Tensile elongation retention (%) | 70 | 78 | 0 | 60 | 0 |
| | Weight loss on heating (%) | 5.0 | 3.2 | 26 | 1.9 | 15.7 |
| Oil resistance $100^{o}C$ for 96 hrs. Thickness of test piece: 1mm | Tensile elongation retention (%) | 80 | 92 | 88 | 50 | 63 |

*4) Same composition as polyester plasticizer A, but the molecular weight is 1,200.

*) TOPM: Tetra-2-ethylhexyl pyromellitate
TOTM: Tri-2-ethylhexyl trimellitate

Table 4

| | Example 6 | Example 7 | Comparative Example 10 | Comparative Example 11 | Comparative Example 12 | Comparative Example 13 |
|---|---|---|---|---|---|---|
| Plasticizer | TNOTM * | TNOTM | TNOTM * | TNOTM * | TNOTM * | TNOTM * |
| Stabilizer | Lead silicate (A) | Lead silicate (B) | Lead silicate (C) | Tribasic lead sulfate | Dibasic lead phthalate | Ba-Zn stabilizer *3) |
| Thermal stability (min) | 1045 | 1000 | 420 | 490 | 480 | 215 |

* TNOTM: Tri-n-octyl trimellitate

*3) Same as in Table 2

Further, with respect to Example 1, Comparative Example 1, Example 2, Example 6, Comparative Example 7 and Comparative Example 11, the changes in the weight loss on heating at 158°C with a number of aging days, are shown in Figure 1. In the Figure, the ordinate represents the weight loss on heating, and the abscissa represents a number of aging days. The corresponding Example and Comparative Example are shown by the same type of curves.

In the combined use of lead silicate (A) and tribasic lead sulfate as the stabilizer, the change in the thermal stability due to the respective proportions was measured with respect to various plasticizers, and the results are shown in Figure 2. In the Figure, the ordinate represents the time until the Congo Red paper underwent color change, and the abscissa represents the proportions of the components of the stabilizer. Among the plasticizers, A is tri-n-octyl trimellitate, B is polyester plasticizer (A), C is tetraheptyl biphenyltetracarboxylate, and D is tetraoctyl pyromellitate.

Lead silicates (A) and (B) as the stabilizer, were prepared in the following manner.

Litherge (PbO having a purity of 99.8%) meeting the requirements prescribed in JIS 1456 No. 1 and silicate powder for crystal glass ($SiO_2$ having a purity of 99.9%) were dry-blended thoroughly in a blender provided with an internal lining containing no iron or chromium so that the weight ratio would be 85:15 in the case of lead silicate (A) and 77:23 in the case of lead silicate (B). This dry blend was supplied at a rate of 100 kg/hr. from a supply end of an electric furnace maintained at a temperature of from 900 to 950°C, and the melt in the same amount as the supplied amount was withdrawn from the discharge end of the electric furnace. The average retention time from the supply end to the discharge end of the electric furnace was set to be about 15 minutes.

The melt discharged from the discharge end of the electric furnace was poured directly into water, whereby a number of lacks were formed in the droplets of the melt and amorphous cullets were formed. The formed cullets were taken out from the water, pulverized and dried to obtain a final product.

Lead silicates (C) and (D) have been commonly used as stabilizers. Namely, lead silicate (C) is basic lead silicate LECTRO 60XL, tradename, manufactured by Associated Lead Company) having a silicon oxide content of 43.2% by weight, and lead silicate (D) is a basic lead silicate (TRIBASE EXL, tradename, manufactured by Associated Lead Company) having a silicon oxide content of 63.7%. Lead silicate (E) is a lead orthosilicate-silica gel coprecipitate having a compositional formula of $PbO.3SiO_2.nH_2O$.

EXAMPLES 8 to 11 and COMPARATIVE EXAMPLE 14

The composition was the same as in Examples 1 to 7 and Comparative Examples 1 to 13 except that the vinyl chloride resin used had an average degree of polymerization $\overline{P}$ of 2,500 and the amount of the plasticizer was changed to 70 parts by weight. With respect to the vinyl chloride resin composition wherein BTPH was used as a plasticizer, the thermal aging resistance was examined, and the results are shown in Table 5.

The thermal aging resistance was measured in accordance with JIS K-6723 except that the heating temperature, the heating time and the thickness of the test piece were changed as identified in the Table.

Table 5

| | | Example 8 | Example 9 | Comparative Example 10 | Comparative Example 11 | Comparative Example 14 |
|---|---|---|---|---|---|---|
| Plasticizer | | BTPH | BTPH | BTPH | BTPH | BTPH |
| Stabilizer (parts by weight) | Lead silicate (A) | 7 | 4.5 | 3 | 3 | |
| | Lead silicate (C) | | | | 4 | |
| | Tribasic lead sulfate | | 2.5 | 4 | | 7 |
| Thermal aging resistance test condition: 158°C for 336 hr. Thickness of test piece: 1mm | Tensile strength retention (%) | 85 | 80 | 80 | 75 | 74 |
| | Tensile elongation retention (%) | 88 | 85 | 80 | 80 | 70 |
| | Weight loss on heating (%) | 0.6 | 1.6 | 1.9 | 1.9 | 3.1 |
| Thermal aging resistance test condition: 158°C for 168 hr. Thickness of test piece: 0.1mm | Tensile strength retention (%) | 80 | 75 | 75 | 73 | 80 |
| | Tensile elongation retention (%) | 75 | 70 | 65 | 65 | 50 |

As is evident from the foregoing Examples, Comparative Examples and Figures 1 and 2, the vinyl chloride resin composition of the present invention wherein a lead silicate is used as a stabilizer, is far superior in the heat stability and the thermal aging properties as compared with the conventional stabilizers, and the composition has also excellent molding processability.

Thus, the composition of the present invention is very useful from the industrial point of view as a coating material for electric wires where heat resistance is required (particularly for thin slender electric wires, or flat cables) or for heat resistant vinyl chloride films.

## Claims

1. A vinyl chloride resin composition comprising 100 parts by weight of a vinyl chloride resin, from 10 to 200 parts by weight of a plasticizer and, as a stabilizer, from 0.5 to 50 parts by weight of a lead silicate obtained by melting a mixture of lead oxide and silicon dioxide, followed by cooling and pulverization.

2. The vinyl chloride resin composition according to Claim 1, wherein the lead silicate is made from a mixture comprising lead oxide and silicon dioxide in a weight ratio of 60-93:40-7, respectively.

3. The vinyl chloride resin composition according to Claim 1, wherein the lead silicate is made from a mixture comprising lead oxide and silicon dioxide in a weight ratio of 70-90:30-10, respectively.

4. The vinyl chloride resin composition according to Claim 1, wherein the plasticizer is an alkyl biphenyltetracarboxylate.

5. The vinyl chloride resin composition according to Claim 4, wherein the alkyl biphenyltetracarboxylate is represented by the formula:

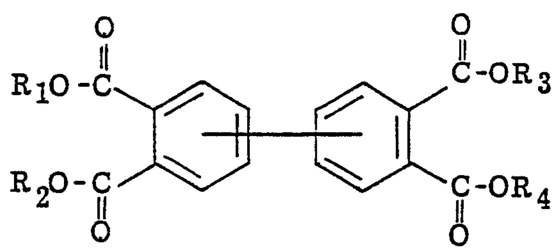

wherein each of $R_1$, $R_2$, $R_3$ and $R_4$ which may be the same or different, is an alkyl group having from 4 to 13 carbon atoms which may have a branched chain.

6. The vinyl chloride resin composition according to Claim 1, wherein the plasticizer is a polyester plasticizer.

EA-6018

# FIGURE 1

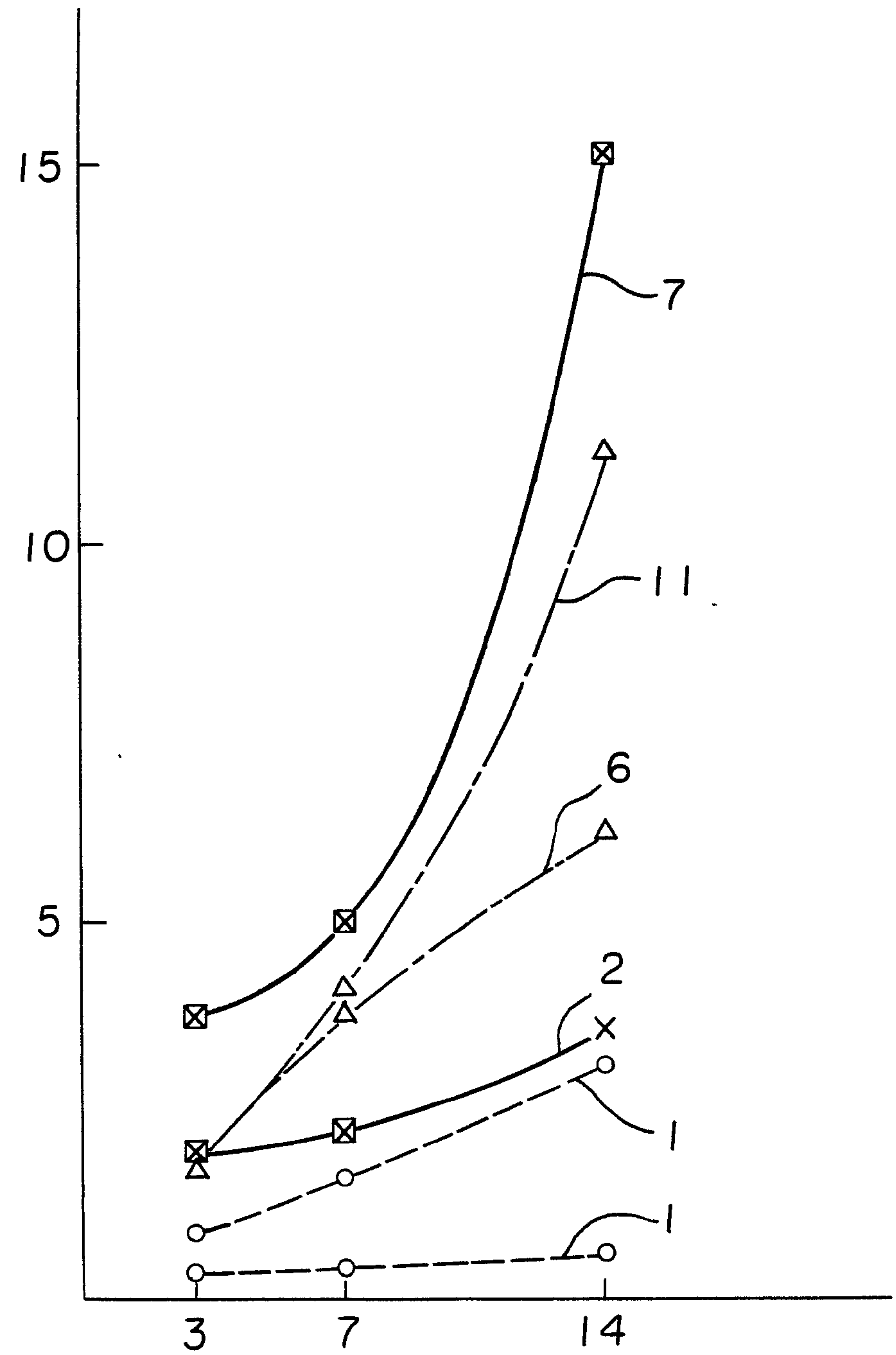

# FIGURE 2